# EUROPEAN PATENT APPLICATION

(11) **EP 4 472 277 A1**
(43) Date of publication of application: **04.12.2024**
(21) Application number: 23747294.9
(22) Date of filing: 25.01.2023
(51) Int. Cl.: H04W 28/02, H04W 28/08, H04L 47/24, H04L 47/32, H04L 12/14

(54) **METHOD FOR EFFECTIVELY SUPPORTING QOS OF AI AND ML SERVICES**

(30) Priority: 25.01.2022 KR 20220011005; 11.07.2022 US 202263359898 P
(71) Applicant: LG Electronics Inc., Yeongdeungpo-gu Seoul 07336 (KR)
(72) Inventor: KIM, Laeyoung, Seoul 06772 (KR); YOUN, Myungjune, Seoul 06772 (KR)
(74) Representative: Frenkel, Matthias Alexander
(86) International application number: PCT/KR2023/001106
(87) International publication number: WO 2023/146253

(57) **Abstract**

Proposed is a method for effectively supporting quality of service (QoS) of artificial intelligence (AI) and machine learning (ML) services. An application function (AF) transmits information about an uplink (UL)/downlink (DL) notification request to a session management function (SMF). The SMF generates a QoS profile on the basis of a policy and charging control (PCC) rule including information about the UL/DL notification request, and transmits the QoS profile to a next generation (NG)-radio access network (RAN). The NG-RAN transmits, to the SMF, a notification message including response information with respect to the UL/DL notification request, on the basis of the occurrence of an event related to the UL/DL notification request.

## Description

### TECHNICAL FIELD

The present disclosure relates to a method for effectively supporting Quality of Service (QoS) of Artificial Intelligence (AI) and Machine Learning (ML) services.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

3GPP Rel-18 is discussing the provision of Artificial Intelligence (AI)/Machine Learning (ML) based services over 5GS. The purpose of these discussions is to focus on enabling AI/ML services and transport with the help of 5GS to support AI/MI, model distribution, transfer, and training for various applications (e.g., video/voice recognition, robot control, automotive, etc.

### DISCLOSURE

### TECHNICAL SOLUTION

In an aspect, a method performed by a Next Generation (NG)-Radio Access Network (RAN) adapted to operate in a wireless communication system is provided. The method comprises, receiving, from a Session Management Function (SMF), a Quality of Service (QoS) profile generated based on a Policy and Charging Control (PCC) rule including information for an Uplink (UL)/Downlink (DL) notification request, and based on an event occurring with respect to the UL/DL notification request, transmitting, to the SMF, a notification message including response information to the UL/DL notification request.

In another aspect, a method performed by an Application Function (AF) adapted to operate in a wireless communication system is provided. The method comprises, transmitting information for an Uplink (UL)/Downlink (DL) notification request to a Session Management Function (SMF), receiving response information to the UL/DL notification request from the SMF, and performing an operation related to Artificial Intelligence (AI)/Machine Learning (ML) based on the response information.

In another aspect, an apparatus implementing the above method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of a wireless device to which implementations of the present disclosure are applied.
FIG. 4 shows an example of UE to which implementations of the present disclosure are applied.
FIG. 5 shows an example of 5G system architecture to which implementations of the present disclosure are applied.
FIG. 6 shows an example of AI/ML operation splitting between AI/ML endpoints as a use case of AI/ML services to which implementations of the present disclosure are applied.
FIG. 7 shows an example of FL over a 5G system as a use case of AI/ML services to which implementations of the present disclosure are applied.
FIG. 8 shows an example of a method performed by a Next Generation (NG)-Radio Access Network (RAN) to which implementations of the present disclosure are applied.
FIG. 9 shows an example of a method performed by an AF to which implementations of the present disclosure are applied.
FIG. 10 shows an example of a method for providing UL/DL notification request information based on setting up AF session with required QoS procedure according to the first implementation of the present disclosure.
FIG. 11 shows an example of a method for providing UL/DL notification request information based on AF session with required QoS update procedure according to the first implementation of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

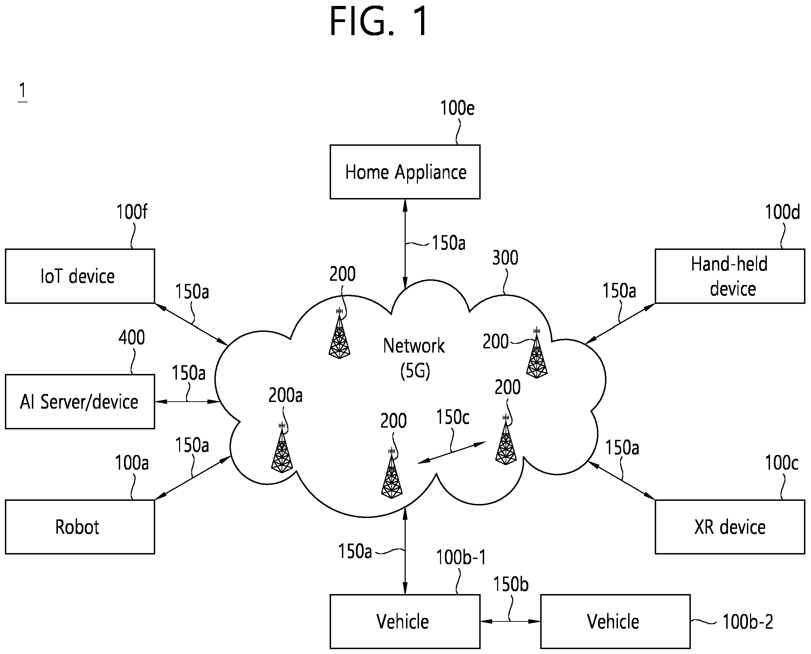

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5GNR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

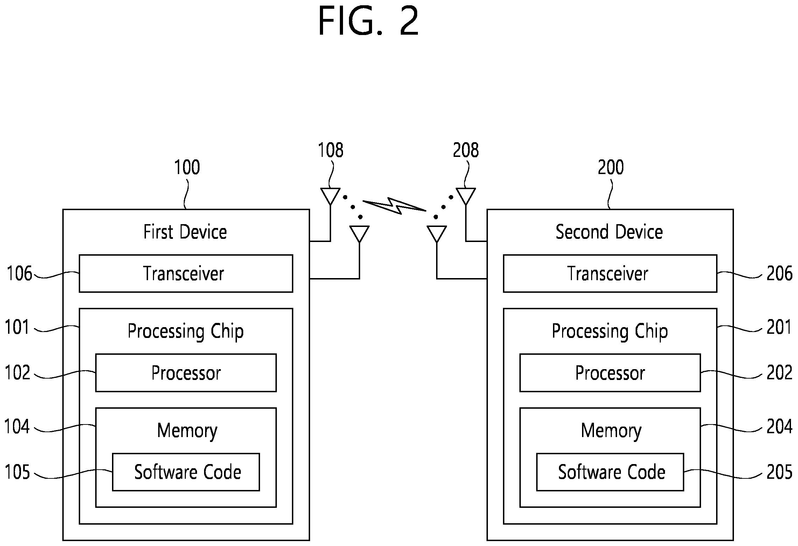

FIG. 2 shows an example of wireless devices to which implementations of the present disclosure are applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be adapted to include the modules, procedures, or functions. Firmware or software adapted to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

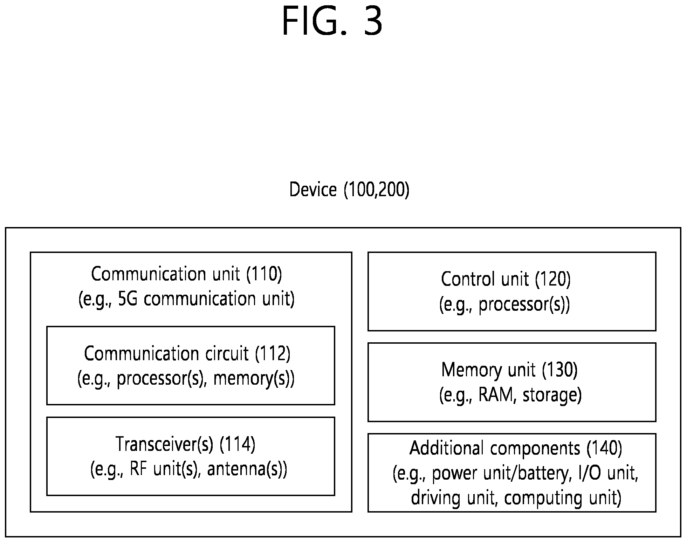

FIG. 3 shows an example of a wireless device to which implementations of the present disclosure are applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

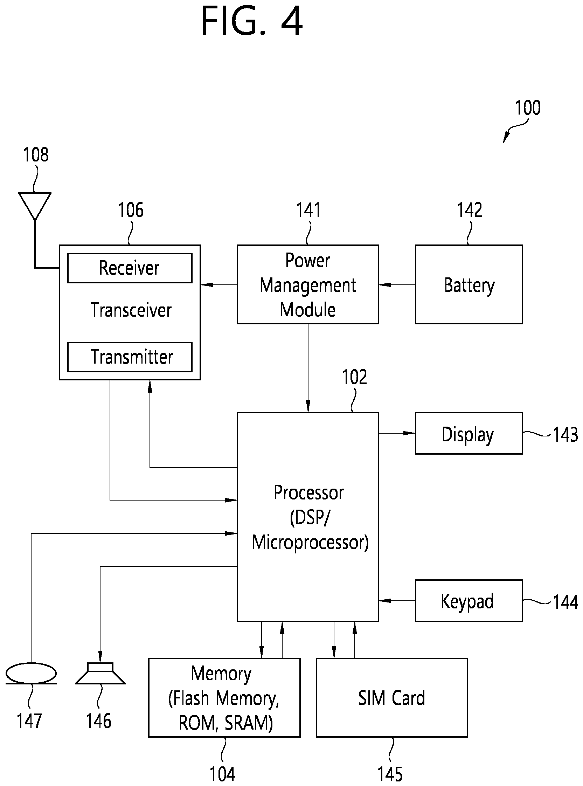

FIG. 4 shows an example of UE to which implementations of the present disclosure are applied.

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

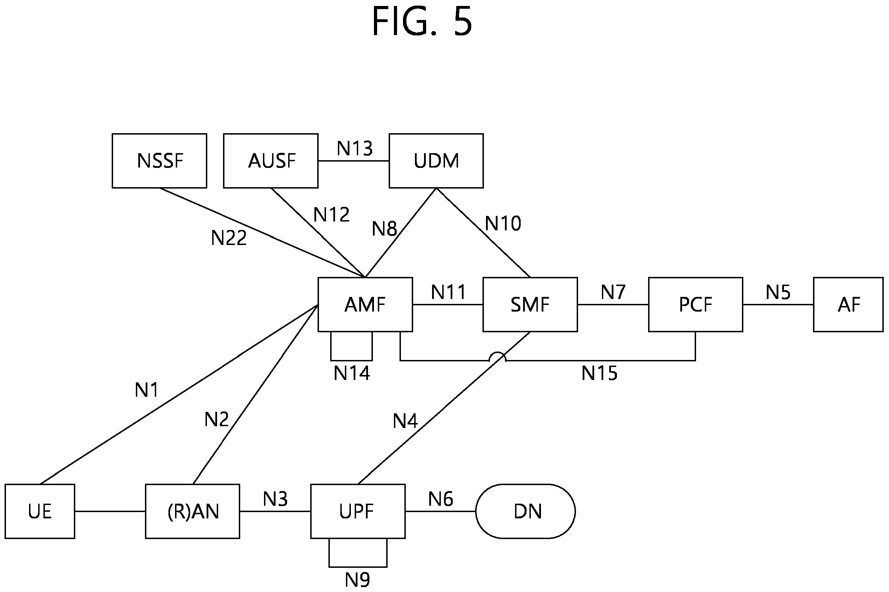

FIG. 5 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 5 depicts the 5G system architecture in the non-roaming case, using the reference point representation showing how various network functions interact with each other.

In FIG. 5, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 5. For clarity, the NWDAF and its connections with other NFs, e.g., PCF, are not depicted in FIG. 5.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

3GPP Rel-18 is discussing the provision of Artificial Intelligence (AI)/Machine Learning (ML) based services in 5GS. The three main types of AI/ML operations are as follows.
- AI/ML operation splitting between AI/ML endpoints
- AI/ML model/data distribution and sharing over 5G system
- Distributed/Federated Learning (FL) over 5G system

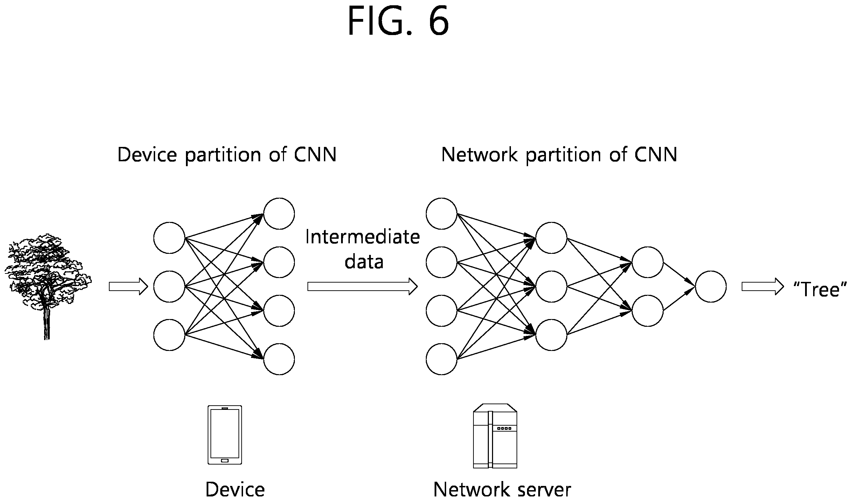

FIG. 6 shows an example of AI/ML operation splitting between AI/ML endpoints as a use case of AI/ML services to which implementations of the present disclosure are applied.

Referring to FIG. 6, the scheme of split AI/ML image recognition is depicted. The Convolutional Neural Network (CNN) is split into two parts, device partition and network partition, according to the current image recognition task and environment. The intention of the partition is to offload the computation-intensive, energy-intensive parts to network server, whereas leave the privacy-sensitive and delay-sensitive parts at the device. The device executes the inference up to a specific CNN layer and sends the intermediate data to the network server. The network server runs through the remaining CNN layers. While the model is developed or invocated, the split AI/ML operation is based on the legacy model.

As pre-conditions of AI/ML operation splitting, the involved AI/ML endpoints (e.g., UE, AI/ML cloud/edge server) run applications providing the capability of AI/ML model inference for image recognition, and support the split AI/ML image recognition operation. Furthermore, the 5G system may provide 5G network related information to the AI/ML server.

Service flows of AI/ML operation splitting are as follows.
1) The AI/ML based image recognition application is requested by the user to start recognizing the image/video shot by the UE.
2) Under the determined split mode and split point, the AI/ML based image recognition application in an involved AI/ML endpoint executes the allocated part of AI/ML model, and sends the intermediate data to the next endpoint in the AI/ML pipeline.
3) After all the involved AI/ML endpoints finish the co-inference, the image recognition results are fed to the user using the results.
4) The AI/ML based image recognition applications in the AI/ML endpoints perform the split image recognition until the image recognition task is terminated.

In order to adapt to the changing conditions, if needed, step 3) and 4) may be performed again for split mode/point re-selection/switching.

As post-conditions of AI/ML operation splitting, the objects in the input images or videos are recognized and the recognition accuracy and latency need to be guaranteed. Furthermore, the image recognition task may be completed under the available computation and energy resource of the UE. And the consumed the computation, communication and energy resources over the AI/ML endpoints are optimized.

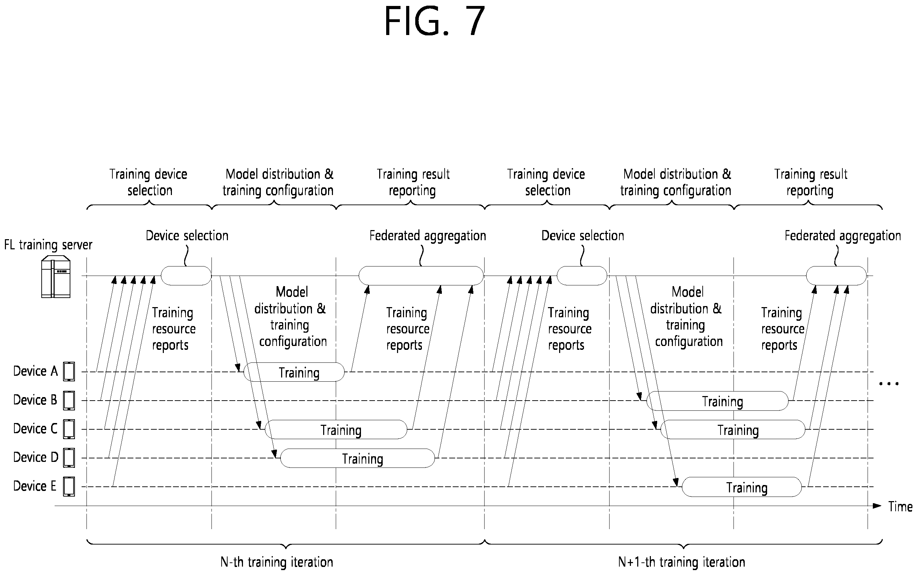

FIG. 7 shows an example of FL over a 5G system as a use case of AI/ML services to which implementations of the present disclosure are applied.

Referring to FIG. 7, uncompressed federated learning for image recognition is depicted. For each iteration, the training devices may firstly be selected. The candidate training devices report their computation resource available for the training task to the FL server. The FL server makes the training device selection based on the reports from the training devices and other conditions, e.g., the training devices' wireless channel conditions, geographic location, etc.

Hereby, besides performing federated learning task, the training devices in a communication system have their other data to transmit at uplink (e.g. for ongoing service transactions), that may be high priority and not latency-tolerant and its transmission may affect a training device's ability to upload the locally trained model. Therefore, training device selection should account for a trade-off to upload the training results as compared to uploading other uplink data. Furthermore, skipping a training device from federated learning model aggregation for one or more iterations affects the convergence of the federated learning model. Therefore, candidate training device selection over wireless links is more complex as compared to federated learning in data centers.

After the training devices are selected, the FL server sends the training configurations to the selected training devices, together with global model for training. A training device starts training based on the received global model and training configuration. When finishing the local training, a training device reports its interim training results (e.g., gradients for the Deep Neural Network (DNN)) to the FL server. In FIG. 7, the training device selection is performed, and the training configurations are sent to the training devices at the beginning of each iteration. If the conditions (e.g., training device's computation resource, wireless channel condition, other service transactions of the training devices) are not changed, the training device re-selection and training re-configuration might not be needed for each iteration. That is, the same group of training devices may participate the training with the same configuration for multiple iterations. Still, the selection of training devices should be alternated over time in order to achieve an independent and identically distributed sampling from all devices, i.e., give a fair chance to all training devices to contribute to the aggregated model.

As pre-conditions of FL, the UE runs an application providing the capability of FL for the image recognition task. The FL application on the UE is capable to report its interim training results to the FL server. The FL server is capable to aggregate the interim training results from the UE, form the global model, and distribute the global model for training in the next iteration. The 5G system may provide 5G network related information to the FL server.

Service flows of FL are as follows.
1) The FL server selects a set of federated UEs based on different own criteria. One possibility is to use available information on UE geographic location (subject to user consent and/or operator/regulatory requirements).
2) The FL server distributes the global model to be federated UEs via 5G network.
3) The FL application in a federated UE performs the training based on the local training data set collected by the UE, and then reports the interim training results (e.g., gradients for the DNN) to the FL server via 5G network.
4) The FL server aggregates the gradients from the UEs, and updates the global model.
5) Redo step 1) to 4) for the training for the next iteration.

As post-conditions of FL, the AI/ML model for image recognition is trained and converges, and the training accuracy and latency need to be guaranteed. The FL training task for image recognition may be completed under the available computation and energy resource of the federated UEs. And the consumed the computation, communication and energy resources over the federated UEs and the FL server are optimized.

Network conditions in 5G systems (e.g., guaranteed Quality of Service (QoS), network congestion, etc.) may affect AI/ML service/application operations and/or the results/inferences of AI/ML operations. Accordingly, a method for effectively supporting QoS may be needed that consider the characteristics of AI/ML services.

In the following description, a method for effectively supporting QoS of AI/ML services may comprise a combination of one or more of the following operations/configurations/steps. As described herein, some of the steps may be performed simultaneously and/or in parallel, or may be performed in an alternating order.

In the following description, AI/ML services may be used interchangeably with AI/ML-based services, AI/ML traffics, AI/ML applications, AI/ML transmission, AI/ML operations, AI/ML operation traffics, etc.

In the following description, User Equipment (UE) and terminal may be used interchangeably.

In the following description, AF may be interpreted as an AI/ML server, a server/function that performs AI/ML operation, etc., and may be understood to perform one or more of the following three operations/functions.
- AI/ML operation splitting between AI/ML endpoints
- AI/ML model/data distribution and sharing over 5G system
- FL over 5G system

In addition, in the following description, a method for effectively supporting QoS of AI/ML services may also be applied to non-AI/ML services. That is, the method proposed herein may be universally applicable to various services.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

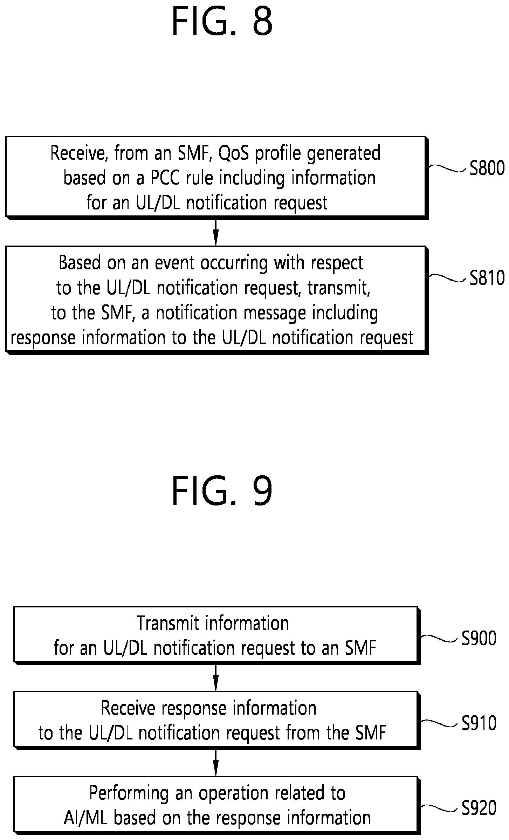

FIG. 8 shows an example of a method performed by a Next Generation (NG)-Radio Access Network (RAN) to which implementations of the present disclosure are applied.

In step S800, the method comprises receiving, from a SMF, a QoS profile generated based on a Policy and Charging Control (PCC) rule including information for an UL/DL notification request.

In step S810, the method comprises, based on an event occurring with respect to the UL/DL notification request, transmitting, to the SMF, a notification message including response information to the UL/DL notification request.

In some implementations, the response information to the UL/DL notification request may include, if QoS cannot be satisfied, information for whether UL QoS cannot be satisfied, DL QoS cannot be satisfied, or both UL/DL QoS cannot be satisfied.

In some implementations, the response information to the UL/DL notification request may include, if QoS cannot be satisfied, information for whether there is any currently ongoing traffic.

In some implementations, the response information to the UL/DL notification request may include, if QoS cannot be satisfied, information for whether UL traffic is present, DL traffic is present, or both UL/DL traffic is present, if there is any currently ongoing traffic.

In some implementations, the response information to the UL/DL notification request may include, if the QoS cannot be satisfied, information informing that a QoS flow is released or removed.

In some implementations, the response information to the UL/DL notification request may include, if QoS can be satisfied again, information for whether UL QoS can be satisfied again, DL QoS can be satisfied again, or both UL/DL QoS can be satisfied again.

In some implementations, the response information to the UL/DL notification request may include, if the QoS can be satisfied again, information for whether there is any currently ongoing traffic.

In some implementations, the response information to the UL/DL notification request may include, if QoS can be satisfied again, information for whether UL traffic is present, DL traffic is present, or both UL/DL traffic is present, if there is any currently ongoing traffic.

In some implementations, the response information to the UL/DL notification request may include, if a QoS requirement of a lowest priority cannot be satisfied, information for whether UL QoS cannot be satisfied, DL QoS cannot be satisfied, or both UL/DL QoS cannot be satisfied.

In some implementations, the response information to the UL/DL notification request may include, if a QoS requirement of a lowest priority cannot be satisfied, information for whether there is any currently ongoing traffic.

In some implementations, the response information to the UL/DL notification request may include, if a QoS requirement of a lowest priority cannot be satisfied, information for whether UL traffic is present, DL traffic is present, or both UL/DL traffic is present, if there is any currently ongoing traffic.

In some implementations, the response information to the UL/DL notification request may include, if a QoS requirement of a lowest priority cannot be satisfied, information informing that a QoS flow is released or removed.

In some implementations, the response information to the UL/DL notification request may be transmitted to a UE.

In some implementations, the notification message may be transmitted in response to at least one of a creation of a PDU session, a modification of a PDU session, a performance of a handover, congestion, and congestion relief.

In some implementations, the response information to the UL/DL notification request included in the notification message and transmitted to the SMF may be communicated from the SMF to an AF via a PCF.

In some implementations, the QoS profile may be received via at least one of a PDU session creation procedure, a PDU session modification procedure, or a handover procedure.

In some implementations, the information for the UL/DL notification request may be generated by an AF and communicated from the AF to the SMF via a PCF.

Furthermore, the method in perspective of the NG-RAN described above in FIG. 8 may be performed by the second wireless device 200 shown in FIG. 2, and/or the wireless device 100 shown in FIG. 3.

More specifically, the NG-RAN comprises at least one transceiver, at least one processor, and at least one memory operably connectable to the at least one processor. The at least one memory stores instructions that, based on being executed by the at least one processor, perform operations below.

The NG-RAN receives, from a SMF, a QoS profile generated based on a PCC rule including information for an UL/DL notification request.

Based on an event occurring with respect to the UL/DL notification request, the NG-RAN transmits, to the SMF, a notification message including response information to the UL/DL notification request.

In some implementations, the response information to the UL/DL notification request may include, if QoS cannot be satisfied, information for whether UL QoS cannot be satisfied, DL QoS cannot be satisfied, or both UL/DL QoS cannot be satisfied.

In some implementations, the response information to the UL/DL notification request may include, if QoS cannot be satisfied, information for whether there is any currently ongoing traffic.

In some implementations, the response information to the UL/DL notification request may include, if QoS cannot be satisfied, information for whether UL traffic is present, DL traffic is present, or both UL/DL traffic is present, if there is any currently ongoing traffic.

In some implementations, the response information to the UL/DL notification request may include, if the QoS cannot be satisfied, information informing that a QoS flow is released or removed.

In some implementations, the response information to the UL/DL notification request may include, if QoS can be satisfied again, information for whether UL QoS can be satisfied again, DL QoS can be satisfied again, or both UL/DL QoS can be satisfied again.

In some implementations, the response information to the UL/DL notification request may include, if the QoS can be satisfied again, information for whether there is any currently ongoing traffic.

In some implementations, the response information to the UL/DL notification request may include, if QoS can be satisfied again, information for whether UL traffic is present, DL traffic is present, or both UL/DL traffic is present, if there is any currently ongoing traffic.

In some implementations, the response information to the UL/DL notification request may include, if a QoS requirement of a lowest priority cannot be satisfied, information for whether UL QoS cannot be satisfied, DL QoS cannot be satisfied, or both UL/DL QoS cannot be satisfied.

In some implementations, the response information to the UL/DL notification request may include, if a QoS requirement of a lowest priority cannot be satisfied, information for whether there is any currently ongoing traffic.

In some implementations, the response information to the UL/DL notification request may include, if a QoS requirement of a lowest priority cannot be satisfied, information for whether UL traffic is present, DL traffic is present, or both UL/DL traffic is present, if there is any currently ongoing traffic.

In some implementations, the response information to the UL/DL notification request may include, if a QoS requirement of a lowest priority cannot be satisfied, information informing that a QoS flow is released or removed.

In some implementations, the response information to the UL/DL notification request may be transmitted to a UE.

In some implementations, the notification message may be transmitted in response to at least one of a creation of a PDU session, a modification of a PDU session, a performance of a handover, congestion, and congestion relief.

In some implementations, the response information to the UL/DL notification request included in the notification message and transmitted to the SMF may be communicated from the SMF to an AF via a PCF.

In some implementations, the QoS profile may be received via at least one of a PDU session creation procedure, a PDU session modification procedure, or a handover procedure.

In some implementations, the information for the UL/DL notification request may be generated by an AF and communicated from the AF to the SMF via a PCF.

FIG. 9 shows an example of a method performed by an AF to which implementations of the present disclosure are applied.

In step S900, the method comprises transmitting information for an UL/DL notification request to a SMF via a PCF.

In step S910, the method comprises receiving response information to the UL/DL notification request from the SMF via the PCF.

In step S920, the method comprises performing an operation related to AI/MI, based on the response information.

In some implementations, the UL/DL notification request may include, if QoS cannot be satisfied, information requesting to be informed of a direction in which the QoS cannot be satisfied.

In some implementations, the UL/DL notification request may include, if QoS cannot be satisfied, information requesting to be informed of whether there is currently any ongoing traffic.

In some implementations, the UL/DL notification request may include, if QoS cannot be satisfied, information requesting to be informed of a direction of currently ongoing traffic, if any.

In some implementations, the UL/DL notification request may include, if QoS cannot be satisfied, information informing to release or remove a QoS flow.

In some implementations, the UL/DL notification request may include, if QoS can be satisfied again, information requesting to be informed of a direction in which the QoS can be satisfied again.

In some implementations, the UL/DL notification request may include, if QoS can be satisfied again, information requesting to be informed of whether there is currently any ongoing traffic.

In some implementations, the UL/DL notification request may include, if QoS can be satisfied again, information requesting to be informed of a direction of currently ongoing traffic, if any.

In some implementations, the UL/DL notification request may include, if a QoS requirement of a lowest priority cannot be satisfied, information requesting to be informed of a direction in which QoS cannot be satisfied.

In some implementations, the UL/DL notification request may include, if a QoS requirement of a lowest priority cannot be satisfied, information requesting to be informed of whether there is currently any ongoing traffic.

In some implementations, the UL/DL notification request may include, if a QoS requirement of a lowest priority cannot be satisfied, information requesting to be informed of a direction of currently ongoing traffic, if any.

In some implementations, the UL/DL notification request may include, if a QoS requirement of a lowest priority cannot be satisfied, information informing to release or remove a QoS flow.

In some implementations, the UL/DL notification request may include information requesting that the response information to the UL/DL notification request also be transmitted to a UE.

In some implementations, the response information to the UL/DL notification request may be generated by a NG-RAN and communicated from the SMF to the AF via the PCF.

Furthermore, the method in perspective of the AF described above in FIG. 9 may be performed by the second wireless device 200 shown in FIG. 2, and/or the wireless device 100 shown in FIG. 3.

More specifically, the AF comprises at least one transceiver, at least one processor, and at least one memory operably connectable to the at least one processor. The at least one memory stores instructions that, based on being executed by the at least one processor, perform operations below.

The AF transmits information for an UL/DL notification request to a SMF via a PCF.

The AF receives response information to the UL/DL notification request from the SMF via the PCF.

The AF performs an operation related to AI/ML based on the response information.

In some implementations, the UL/DL notification request may include, if QoS cannot be satisfied, information requesting to be informed of a direction in which the QoS cannot be satisfied.

In some implementations, the UL/DL notification request may include, if QoS cannot be satisfied, information requesting to be informed of whether there is currently any ongoing traffic.

In some implementations, the UL/DL notification request may include, if QoS cannot be satisfied, information requesting to be informed of a direction of currently ongoing traffic, if any.

In some implementations, the UL/DL notification request may include, if QoS cannot be satisfied, information informing to release or remove a QoS flow.

In some implementations, the UL/DL notification request may include, if QoS can be satisfied again, information requesting to be informed of a direction in which the QoS can be satisfied again.

In some implementations, the UL/DL notification request may include, if QoS can be satisfied again, information requesting to be informed of whether there is currently any ongoing traffic.

In some implementations, the UL/DL notification request may include, if QoS can be satisfied again, information requesting to be informed of a direction of currently ongoing traffic, if any.

In some implementations, the UL/DL notification request may include, if a QoS requirement of a lowest priority cannot be satisfied, information requesting to be informed of a direction in which QoS cannot be satisfied.

In some implementations, the UL/DL notification request may include, if a QoS requirement of a lowest priority cannot be satisfied, information requesting to be informed of whether there is currently any ongoing traffic.

In some implementations, the UL/DL notification request may include, if a QoS requirement of a lowest priority cannot be satisfied, information requesting to be informed of a direction of currently ongoing traffic, if any.

In some implementations, the UL/DL notification request may include, if a QoS requirement of a lowest priority cannot be satisfied, information informing to release or remove a QoS flow.

In some implementations, the UL/DL notification request may include information requesting that the response information to the UL/DL notification request also be transmitted to a UE.

In some implementations, the response information to the UL/DL notification request may be generated by a NG-RAN and communicated from the SMF to the AF via the PCF.

Various implementations of the present disclosure are described below.

### 1. First implementation

The first implementation of the present disclosure discloses a method for providing UL/DL related information together when the NG-RAN provides QoS flow related information (e.g., when notifying a QoS flow related event).
(1) A method for the AF to provide UL/DL notification request information to the SMF via PCF (e.g., subscribing to UL/DL notification events)

The method for the AF to provide UL/DL notification request information to the SMF via the PCF, according to the first implementation of the present disclosure, may correspond to step S900 of FIG. 9 described above.

The method for the AF to provide UL/DL notification request information to the SMF via the PCF, according to the first implementation of the present disclosure, may be based on setting up AF session with required QoS procedure or AF session with required QoS update procedure. The setting up AF session with required QoS procedure may refer to S4.15.6.6 of 3GPP TS 23.502 V17.3.0, and the AF session with required QoS update procedure may refer to S4.15.6.6a of 3GPP TS 23.502 V17.3.0.

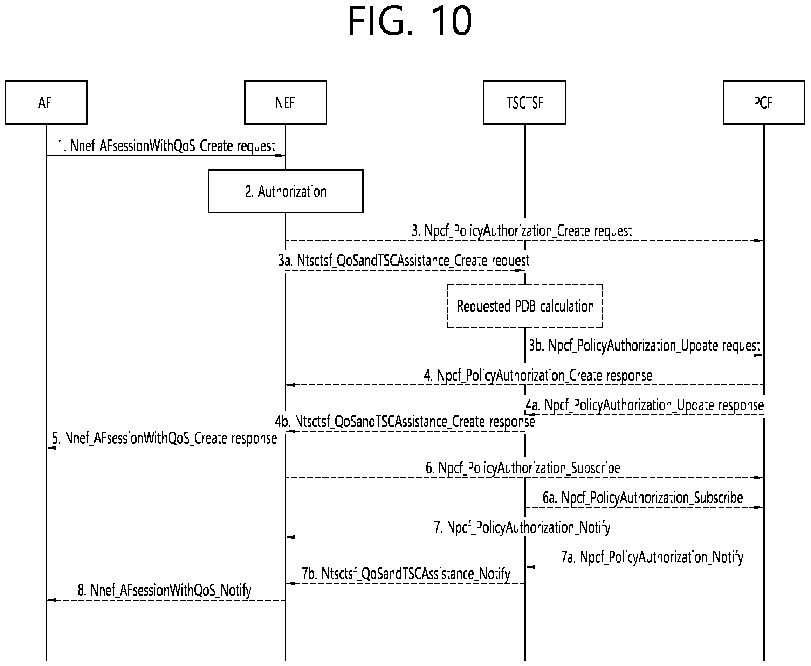

FIG. 10 shows an example of a method for providing UL/DL notification request information based on setting up AF session with required QoS procedure according to the first implementation of the present disclosure.
1. The AF sends a resource reserve request to for an AF session using Nnef_AFsessionWithQoS_Create request message to the NEF. The Nnef_AFsessionWithQoS_Create request message may include at least one of UE address, AF Identifier, Flow description(s) or External Application Identifier, QoS reference, (optional) Alternative Service Requirements, Data Network Name (DNN), Single Network Slice Selection Assistance Information (S-NSSAI). Optionally, a period of time or a traffic volume for the requested QoS may be included in the AF request. The AF may, instead of a QoS Reference, provide the following individual QoS parameters: Requested 5GS delay (optional), Requested Priority (optional), Requested Guaranteed Flow Bit Rate (GFBR), Requested Maximum Flow Bit Rate (MFBR), flow direction, Burst Size (optional), Burst Arrival Time (optional) at UE (uplink) or UPF (downlink), Periodicity (optional), Time domain (optional), Survival Time (optional). When Alternative Service Requirements are provided by the AF, a set of Alternative QoS Related parameters may be provided for each QoS Reference.

The AF may additionally include one or more of the following information in the Nnef_AFsessionWithQoS_Create request message. The information below may be referred to as UL/DL notification request information. The UL/DL notification request information may be included in any combination, explicitly or implicitly.
1) If the QoS cannot be satisfied, request to be informed of a direction in which it cannot be satisfied (i.e., request to be informed whether the UL QoS cannot be satisfied, the DL QoS cannot be satisfied, or both UL/DL QoS cannot be satisfied).
2) If the QoS cannot be satisfied, request to be informed of whether there is any currently ongoing traffic.
3) If the QoS cannot be satisfied, request to be informed of a direction of currently ongoing traffic, if any (i.e., request to be informed whether UL traffic is present, DL traffic is present, or both UL/DL traffic is present).
4) If the QoS cannot be satisfied, request to release and/or remove a QoS flow, and request to be informed that the QoS flow has been released and/or removed.
5) If the QoS can be satisfied again, request to be informed of a direction in which it can be satisfied again (i.e., request to be informed whether the UL QoS can be satisfied again, the DL QoS UL QoS can be satisfied again, or both UL/DL QoS UL QoS can be satisfied again).
6) If the QoS can be satisfied again, request to be informed of whether there is any currently ongoing traffic.
7) If the QoS can be satisfied again, request to be informed of a direction of currently ongoing traffic, if any (i.e., request to be informed whether UL traffic is present, DL traffic is present, or both UL/DL traffic is present).
8) If the QoS Reference of the lowest priority in the Alternative Service Requirements cannot be satisfied (i.e., the lowest level of service/QoS requirement cannot be satisfied), request to be informed of a direction in which it cannot be satisfied (i.e., request to be informed whether the UL QoS cannot be satisfied, the DL QoS cannot be satisfied, or both UL/DL QoS cannot be satisfied).
9) If the QoS Reference of the lowest priority in the Alternative Service Requirements cannot be satisfied (i.e., the lowest level of service/QoS requirement cannot be satisfied), request to be informed of whether there is any currently ongoing traffic.
10) If the QoS Reference of the lowest priority in the Alternative Service Requirements cannot be satisfied (i.e., the lowest level of service/QoS requirement cannot be satisfied), request to be informed of a direction of currently ongoing traffic, if any (i.e., request to be informed whether UL traffic is present, DL traffic is present, or both UL/DL traffic is present).
11) If the QoS Reference of the lowest priority in the Alternative Service Requirements cannot be satisfied (i.e., the lowest level of service/QoS requirement cannot be satisfied), request to release and/or remove a QoS flow.
12) When informing the AF of the information requested in 1) to 11) above, request that the UE is also informed (for each of 1) to 11) above, it may be requested whether the UE is also informed or not, or for all of 1) to 11) above in a combined form, whether the UE is also informed or not).

The AF may provide input using the QoS Reference. The QoS parameters matching the QoS Reference may be configured in the NEF or PCF. Based on this, the AF may request UL and/or DL notification by providing the QoS Reference that matches a QoS parameter set to UL only or DL only. This may be done by having the UL and/or DL direction set in the packet filter of the QoS parameter, or it may be stored as a separate parameter (as in 1) through 11) above).

The inclusion of the UL/DL notification request information in the Nnef_AFsessionWithQoS_Create request message by the AF may be interpreted as a subscription to the corresponding notification event.

The UL/DL notification request information may be included in the Nnef_AFsessionWithQoS_Create request message if the AF requires the relevant request information. For example, the AF may always require the relevant request information. For example, if the AF is an AI/ML server, the AF may require relevant request information. For example, if the request is for an AI/ML service and/or an AI/ML application, the AF may require the relevant request information. For example, if the DNN and/or S-NSSAI above is for AI/ML services, the AF may require the relevant request information. In addition, the AF may require relevant request information based on various criteria.

The UL/DL notification request information may be included in the Nnef_AFsessionWithQoS_Create request message along with a request to be notified if the AF is no longer (or ever again) able to satisfy the QoS targets. Alternatively, it may be included in the Nnef_AFsessionWithQoS_Create request message when the AF includes the Alternative Service Requirements.

2. The NEF assigns a Transaction Reference ID to the Nnef_AFsessionWithQoS_Create request. The NEF authorizes the AF request and may apply policies to control the overall amount of QoS authorized for the AF. If the authorization is not granted, all steps (except step 5) are skipped and the NEF replies to the AF with a result value indicating that the authorization failed.

If the NEF does not receive any of the individual QoS parameters from the AF, the steps 3, 4, 5, 6, 7, 8 below are executed, otherwise, the steps 3a, 3b, 4a, 4b, 5, 6a, 7a, 7b, 8 below are executed.

3. If the NEF does not receive any of the individual QoS parameters from the AF, the NEF uses the UE address to discover the PCF from the Binding Support Function (BSF). The NEF interacts with the PCF by triggering a Npcf_PolicyAuthorization_Create request and provides UE address, AF Identifier, Flow description(s), the QoS Reference and the optional Alternative Service Requirements. Any optionally received period of time or traffic volume is also included and mapped to sponsored data connectivity information.

The NEF may provide UL/DL notification request information to the PCF in step 3, or may provide it to the PCF in step 6. Alternatively, some of the request information may be provided to the PCF in step 3 and some of the request information may be provided to the PCF in step 6.

If the AF is considered to be trusted by the operator, the AF uses the Npcf_PolicyAuthorization_Create request message to interact directly with PCF to request reserving resources for an AF session. In this case, the AF may include the UL/DL notification request information described in step 1 in the Npcf_PolicyAuthorization_Create request message and provide it to the PCF. The Nnef_AFsessionWithQoS_Create request message in step 1 may be interpreted as a replacement for the Npcf_PolicyAuthorization_Create request message. Additionally, the AF may provide the UL/DL notification request information described in step 1 to the PCF via Npcf_PolicyAuthorization_Subscribe. Alternatively, the AF may provide some of the UL/DL notification request information to the PCF by including it in the Npcf_PolicyAuthorization_Create request message, and the rest of the information to the PCF via Npcf_PolicyAuthorization_Subscribe.

3a. If the NEF receives any of the individual QoS parameters from the AF, the NEF forwards these received individual QoS parameters in the Ntsctsf_QoSandTSCAssistance_Create request message to the Time Sensitive Communication Time Synchronization Function (TSCTSF).

If the AF is considered to be trusted by the operator, the AF uses the Ntsctsf_QoSandTSCAssistance _Create request message to interact directly with the TSCTSF to request reserving resources for an AF session.

A TSCTSF address may be locally configured (a single TSCTSF per DNN/S-NSSAI) in the NEF, PCF and trusted AF. Alternatively, the TSCTSF is discovered from the NRF.

3b. The TSCTSF interacts with the PCF by triggering a Npcf_PolicyAuthorization_Update request and provides UE address, AF Identifier, Flow description(s), the QoS Reference, Individual QoS Parameters and the optional Alternative Service Requirements. Any optionally received period of time or traffic volume is also included and mapped to sponsored data connectivity information.

If the TSCTSF receives a Requested 5GS delay, the TSCTSF calculates a Requested Packet Delay Budget (PDB) by subtracting the UE-DS-TT Residence Time, provided by the PCF (if available), from the Requested 5GS delay. If the TSCTSF receives any of the following individual QoS parameters, flow direction, Burst Arrival Time, Periodicity, Time domain, Survival Time from the NEF, the TSCTSF determines the TSC Assistance Container and sends it together with the Requested PDB, the TSC Assistance Container, and other received individual QoS parameters in the Npcf_PolicyAuthorization_Update request to the PCF.

The TSCTSF may also discover the PCF in case the TSCTSF has not received any notification from PCF (e.g., no UE-DS-TT Residence time), TSCTSF sends the Requested PDB, the TSC Assistance Container, and other received individual QoS and Alternative QoS Related parameters to the PCF.

4. For requests received from the NEF in step 3, the PCF determines whether the request is authorized and notifies the NEF if the request is not authorized.

If the request is authorized, the PCF derives the required QoS parameters based on the information provided by the NEF and determines whether this QoS is allowed (according to the PCF configuration), and notifies the result to the NEF. In addition, if the Alternative Service Requirements are provided, the PCF derives the Alternative QoS parameter set(s) from the one or more QoS reference parameters contained in the Alternative Service Requirements in the same prioritized order.

If the AF is considered to be trusted by the operator, the PCF sends the Npcf_PolicyAuthorization_Create response message directly to the AF.

The PCF derived Alternative QoS parameter set(s) for the PCC rule are subsequently used to establish Alternative QoS Profile(s).

If the PCF determines that the SMF needs updated policy information, the PCF issues a Npcf_SMPolicyControl_UpdateNotify request with updated policy information about the PDU session.

If the request is not authorized, or the required QoS is not allowed, NEF responds to the AF in step 5 with a result value indicating the failure cause.

4a. For requests received from the TSCTSF in step 3b, the PCF determines whether the request is authorized and notifies the TSCTSF if the request is not authorized.

If the request is authorized, the PCF derives the required QoS parameters based on the information provided by the TSCTSF and determines whether this QoS is allowed (according to the PCF configuration), and notifies the result to the TSCTSF. In addition, if the Alternative Service Requirements are provided, the PCF derives the Alternative QoS parameter set(s) from the one or more QoS reference parameters (if provided) contained in the Alternative Service Requirements in the same prioritized order.

If the PCF receives the individual QoS parameters instead of QoS Reference, the PCF sets the PDB and Maximum Data Burst Volume (MDBV) according to the received Requested PDB and Burst Size received from the TSCTSF. If the Requested PDB is not provided, the PCF determines the PDB that matches the QoS Reference. The PCF also sets the GFBR and MFBR according to requested values sent by the TSCTSF. The PCF may use the Requested Priority from the AF to determine QoS Flow Priority. TSCTSF specified Individual QoS Parameter values supersede default values for the 5G QoS Identifier (5QI).

If the PCF determines that the SMF needs updated policy information, the PCF issues a Npcf_ SMPolicyControl_UpdateNotify request with updated policy information about the PDU session.

If the request is not authorized, or the required QoS is not allowed, the TSCTSF responds to the NEF in step 4b with a result value indicating the failure cause.

4b. The TSCTSF sends a Ntsctsf_QoSandTSCAssistance_Create response message to the NEF. The Ntsctsf_QoSandTSCAssistance_Create response message may include at least one of Transaction Reference ID, result. The result indicates whether the request is granted or not.

If the AF is considered to be trusted by the operator, the TSCTSF sends the Ntsctsf_QoSandTSCAssistance_Create response message directly to AF.

5. The NEF sends a Nnef_AFsessionWithQoS_Create response message to the AF. The Nnef_AFsessionWithQoS_Create response message may include at least one of Transaction Reference ID, result. The result indicates whether the request is granted or not.

6. The NEF may send a Npcf_PolicyAuthorization_Subscribe message to the PCF to subscribe to notifications of resource allocation status and may subscribe to other events.

When the PCF generates the PCC rule that it provides to the SMF (after step 3 above), it may include UL/DL notification request information based on one or more of the UL/DL notification request information provided by the AF in step 1 or step 3 above, the information provided by the NEF in step 3 and/or step 6, the subscriber information of the UE, and the policies set in the PCF. The inclusion of such UL/DL notification request information may be interpreted as a request to the SMF to notify the UE when an event related to the request occurs.

Even if the AF does not provide UL/DL notification request information and/or provides only partial request information, the PCF may determine that UL/DL notification request information is required based on the subscriber information of the UE and/or policies set in the PCF. For example, if the AF is an AI/ML server, the PCF may determine that UL/DL notification request information is required. For example, if the AF request is for AI/MI, services and/or AI/ML applications, the PCF may determine that UL/DL notification request information is required. For example, if the DNN and/or S-NSSAI is for AI/ML services, the PCF may determine that UL/DL notification request information is required. For example, if the UE is a UE capable of performing AI/ML services, the PCF may determine that UL/DL notification request information is required. In addition, the PCF may determine that UL/DL notification request information is required based on various other information/policies.

6a. The TSCTSF may send a Npcf_PolicyAuthorization_Subscribe message to the PCF to subscribe to notifications of resource allocation status and may subscribe to other events

7. When the event condition is met, e.g., that the establishment of the transmission resources corresponding to the QoS update succeeded or failed, the PCF sends Npcf_PolicyAuthorization_Notify message to the NEF notifying about the event.

If the AF is considered to be trusted by the operator, the PCF sends the Npcf_PolicyAuthorization_Notify message directly to the AF.

7a. When the event condition is met, e.g., that the establishment of the transmission resources corresponding to the QoS update succeeded or failed, the PCF sends Npcf_PolicyAuthorization_Notify message to the TSCTSF notifying about the event.

7b. The TSCTSF sends Ntsctsf_QoSandTSCAssistance_Notify message with the event reported by the PCF to the NEF.

If the AF is considered to be trusted by the operator, the TSCTSF sends the Ntsctsf_QoSandTSCAssistance_Notify message directly to the AF.

8. The NEF sends Nnef_AFsessionWithQoS_Notify message with the event reported by the PCF to the AF.

The AF may send Nnef_AFsessionWithQoS_Revoke request to NEF in order to revoke the AF request. The NEF authorizes the revoke request and triggers the Ntsctsf_QoSandTSCAssistance_Delete/Unsubscribe and/or Npcf_PolicyAuthorization_Delete and the Npcf_PolicyAuthorization_Unsubscribe operations for the AF request.

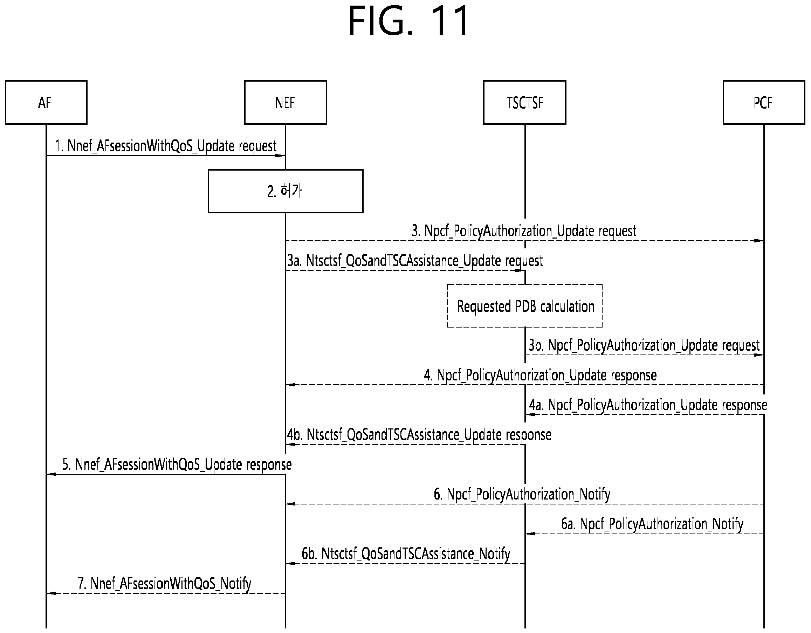

FIG. 11 shows an example of a method for providing UL/DL notification request information based on AF session with required QoS update procedure according to the first implementation of the present disclosure.
1. For an established AF session with required QoS, the AF may send a Nnef_AFsessionWithQoS_Update request message to NEF for updating the reserved resources. The Nnef_AFsessionWithQoS _Update request message may include ast least one of AF Identifier, Transaction Reference ID, [Flow description(s)], [QoS Reference], [Alternative Service Requirements. Optionally, a period of time or a traffic volume for the requested QoS may be included in the AF request. The Transaction Reference ID provided in the Nnef_AFsessionWithQoS_Update request message is set to the Transaction Reference ID that was assigned, by the NEF, to the Nnef_AFsessionWithQoS_Create request message. The AF may in addition provide the following individual QoS parameters: Requested 5GS delay (optional), Requested Priority (optional), Requested GFBR, Requested MFBR, flow direction, Burst Size (optional), Burst Arrival Time (optional) at UE (uplink) or UPF (downlink), Periodicity (optional), Time domain (optional), Survival Time (optional). When Alternative Service Requirements are provided by the AF, a set of Alternative QoS Related parameters may be provided for each QoS Reference.

The AF may include at least one of the UL/DL notification request information described in FIG. 10 in the Nnef_AFsessionWithQoS _Update request message. The UL/DL notification request information may be included in any combination, explicitly or implicitly. The AF may provide the UL/DL notification request information by directly transmitting QoS parameters and/or by utilizing a preset QoS Reference. For example, the QoS parameters corresponding to the QoS Reference may be configured in the NEF or PCF. The QoS parameters corresponding to the QoS Reference may be configured for UL-only or DL-only. In addition, a parameter that includes both ULs and DLs may be configured.

2. The NEF authorizes the AF request of updating AF session with required QoS and may apply policies to control the overall amount of QoS authorized for the AF. If the authorization is not granted, all steps (except step 5) are skipped and the NEF replies to the AF with a result value indicating that the authorization failed.

If the NEF does not receive any of the individual QoS parameters from the AF, then the steps 3, 4, 5, 6, 7 below are executed, otherwise, the steps 3a, 3b, 4a, 4b, 5, 6a, 6b, 7 below are executed.

3. If the NEF does not receive any of the individual QoS parameters or Alternative QoS Related parameter set(s) from the AF, the NEF uses the UE address to discover the PCF from the BSF. The NEF interacts with the PCF by triggering a Npcf_PolicyAuthorization_Update request and provides UE address, AF Identifier, Flow description(s), the QoS Reference and the optional Alternative Service Requirements. Any optionally received period of time or traffic volume is also included and mapped to sponsored data connectivity information.

The NEF may provide the UL/DL notification request information received from the AF in step 1 to the PCF in step 3, or may provide it to the PCF using Npcf_PolicyAuthorization_Subscribe (not shown in FIG. 11). Alternatively, a portion of the UL/DL notification request information may be provided to the PCF in step 3 and the remaining portion may be provided to the PCF using Npcf_PolicyAuthorization_Subscribe (not shown in FIG. 11).

If the AF is considered to be trusted by the operator, the AF uses the Npcf_PolicyAuthorization_Update request message to interact directly with PCF to update the reserving resources for an AF session. In this case, the AF may include the UL/DL notification request information described in step 1 in the Npcf_PolicyAuthorization_Update request message and provide it to the PCF. The Nnef_AFsessionWithQoS_Update request message in step 1 may be interpreted as a replacement for the Npcf_PolicyAuthorization_Update request message.

When the PCF generates the PCC rules to be provided to the SMF (after step 3), the PCF may include the UL/DL notification request information. In this regard, step 6 of FIG. 10 may be referred.

3a. If the NEF receives one or more of the individual QoS parameters from the AF, the NEF forwards these received individual QoS parameters in the Ntsctsf_QoSandTSCAssistance_Update or Ntsctsf_QoSandTSCAssistance_Create request message to the TSCTSF.

If the AF is considered to be trusted by the operator, the AF uses the Ntsctsf_QoSandTSCAssistance_Update request message to interact directly with TSCTSF to update the reserving resources for an AF session.

A TSCTSF address may be locally configured (a single TSCTSF per DNN/S-NSSAI) in the NEF, PCF and trusted AF. Alternatively, the TSCTSF is discovered from the NRF.

3b. The TSCTSF interacts with the PCF by triggering a Npcf_PolicyAuthorization_Update request and provides UE address, AF Identifier, Flow description(s), the QoS Reference, Individual QoS Parameters and the optional Alternative Service Requirements. Any optionally received period of time or traffic volume is also included and mapped to sponsored data connectivity information.

If the TSCTSF receives a Requested 5GS delay, the TSCTSF calculates a Requested PDB by subtracting the UE-DS-TT Residence Time provided by the PCF (if available) from the Requested 5GS delay.

If the TSCTSF receives any of the flow direction, Burst Arrival Time, Periodicity, Time domain, Survival Time from the NEF, the TSCTSF forwards these parameters in the TSC Assistance Container in the Npcf_PolicyAuthorization_Update request to the PCF. The TSCTSF sends the Requested PDB, the TSC Assistance Container, and other received individual QoS parameters in the Npcf_PolicyAuthorization_Update request to the PCF.

The TSCTSF may also discover the PCF in case the TSCTSF has not received any notification from PCF (e.g., no UE-DS-TT Residence time), TSCTSF sends the Requested PDB, the TSC Assistance Container, and other received individual QoS and Alternative QoS Related parameters to the PCF.

4. For the request received from the NEF in step 3, the PCF determines whether the request is authorized.

If the request is authorized, the PCF derives the required QoS parameters based on the information provided by the NEF and determines whether this QoS is allowed (according to the PCF configuration), and notifies the result to the NEF. In addition, if the Alternative Service Requirements are provided, the PCF derives the Alternative QoS parameter set(s) from the one or more QoS reference parameters contained in the Alternative Service Requirements in the same prioritized order.

If the PCF determines that the SMF needs updated policy information, the PCF issues a Npcf_ SMPolicyControl_UpdateNotify request with updated policy information about the PDU session.

If the AF is considered to be trusted by the operator, the PCF sends the Npcf_PolicyAuthorization_Update response message directly to the AF.

If the request is not authorized or the required QoS is not allowed, the NEF responds to the AF in step 5 with a result value indicating the failure cause.

4a. For the request received from the TSCTSF in step 3b, the PCF determines whether the request is authorized.

If the request is authorized, the PCF derives the required QoS parameters based on the information provided by the TSCTSF and determines whether this QoS is allowed (according to the PCF configuration), and notifies the result to the TSCTSF. In addition, if the Alternative Service Requirements are provided, the PCF derives the Alternative QoS parameter set(s) from the one or more QoS reference parameters (if provided) contained in the Alternative Service Requirements in the same prioritized order.

If the PCF receives individual QoS parameters instead of a QoS Reference, the PCF sets the PDB and/or MDBV according to the received Requested PDB and Burst Size received from the TSCTSF. If the Requested PDB is not provided from TSCTSF, the PCF determines the PDB that matches the QoS Reference. It also sets the GFBR and MFBR according to the requested values provided by the TSCTSF. The PCF may use the Priority requested by the AF to determine QoS Flow Priority. The MFBR is used to assign the MBR value and then GBR is set equal to the MBR unless the TSCTSF provides a GFBR value. TSCTSF specified Individual QoS Parameter values supersede default values for the 5QI.

If the PCF determines that the SMF needs updated policy information, the PCF issues a Npcf_SMPolicyControl_UpdateNotify request with updated policy information about the PDU session.

If the request is not authorized or the required QoS is not allowed, the TSCTSF responds to the NEF in step 4b with a result value indicating the failure cause.

4b. The TSCTSF sends a Ntsctsf_QoSandTSCAssistance_Update response message to the NEF. The Ntsctsf_QoSandTSCAssistance_Update response message may include at least one of Transaction Reference ID, result. The result indicates whether the request is granted or not.

If the AF is considered to be trusted by the operator, the TSCTSF sends the Ntsctsf_QoSandTSCAssistance_Update response message directly to the AF.

5. The NEF sends a Nnef_AFsessionWithQoS_Update response message to the AF. The Nnef_AFsessionWithQoS_Update response message may include at least one of Transaction Reference ID, result. The result indicates whether the request is granted or not.

6. The PCF sends Npcf_PolicyAuthorization_Notify message to the NEF when the modification of the transmission resources corresponding to the QoS update succeeded or failed.

If the AF is considered to be trusted by the operator, the PCF sends the Npcf_PolicyAuthorization_Notify message directly to the AF.

6a. The PCF sends Npcf_PolicyAuthorization_Notify message to the TSCTSF when the modification of the transmission resources corresponding to the QoS update succeeded or failed.

6b. The TSCTSF sends Ntsctsf_QoSandTSCAssistance_Notify message with the event reported by the PCF to the NEF.

If the AF is considered to be trusted by the operator, the TSCTSF sends the Ntsctsf_QoSandTSCAssistance_Notify message directly to the AF.

7. The NEF sends Nnef_AFsessionWithQoS_Notify message with the event reported by the PCF to the AF.

(2) A method for the SMF to provide UL/DL notification request information to the NG-RAN

If the PCC rules provided by the PCF include the UL/DL notification request information, the SMF may generate QoS profiles and/or alternative QoS profiles to be provided to the NG-RAN based on them.

The UL/DL notification request information may be provided to the NG-RAN as part of the QoS Notification Control (QNC) or as part of the QNC with Alternative QoS Profiles (AQP). In FIG. 10 or FIG. 11, if the AF has provided Alternative Service Requirements, the SMF may generate the AQP. Regarding the QNC and AQP, S5.7.2.4 of 3GPP TS 23.501 V17.3.0 may be referred.

To provide the UL/DL notification request information to the NG-RAN, the existing QoS profiles and alternative QoS profiles may be extended and used and/or new forms of QoS profiles may be defined and used.

The SMF may provide QoS profiles and/or alternative QoS profiles to the NG-RAN at the time of PDU session creation, PDU session modification, etc. Alternatively, the SMF may provide the QoS profiles and/or alternative QoS profiles to the target NG-RAN at handover.

(3) A method for the NG-RAN to notify the SMF when events related to the UL/DL notification request occur.

The NG-RAN may notify the SMF when events related to the UL/DL notification request occur for any QoS flow. For such notification, existing notification related messages may be extended and used and/or new messages may be defined and used.

In response to the UL/DL notification request information described in FIG. 10 and/or FIG. 11, the response information that the NG-RAN notifies when the relevant event occurs may be as follows. For example, if the UL/DL notification request information includes the information of 1), the response information of 1) below may be included when the relevant event occurs. The following response information may be included in any combination, explicitly or implicitly.
1) If the QoS cannot be satisfied, information for whether the UL QoS cannot be satisfied, the DL QoS cannot be satisfied, or both UL/DL QoS cannot be satisfied.
2) If the QoS cannot be satisfied, information for whether there is any currently ongoing traffic. This may also be included only if there is ongoing traffic.
3) If the QoS cannot be satisfied, information for whether there is any currently ongoing traffic, if so, whether it is UL traffic, DL traffic, or both UL/DL traffic.
4) If the QoS cannot be satisfied, information informing that the QoS flow is being released and/or removed. If requested by the AF, the SMF may release and/or remove the QoS flow upon notification from the NG-RAN that the QoS cannot be satisfied, instead of providing the requested information to the NG-RAN.
5) If the QoS can be satisfied again, information for whether the UL QoS can be satisfied again, the DL QoS can be satisfied again, or both UL/DL QoS can be satisfied again.
6) If the QoS can be satisfied again, information for whether there is any currently ongoing traffic. This may also be included only if there is ongoing traffic.
7) If the QoS can be satisfied again, information for whether there is any currently ongoing traffic, if so, whether it is UL traffic, DL traffic, or both UL/DL traffic.
8) If the QoS reference of the lowest priority in the Alternate Service Requirement cannot be satisfied (i.e., the lowest level of service/QoS requirement cannot be satisfied), information for whether the UL QoS cannot be satisfied, the DL QoS cannot be satisfied, or the QoS of both UL/DL cannot be satisfied.
9) If the QoS reference of the lowest priority in the Alternate Service Requirement cannot be satisfied (i.e., the lowest level of service/QoS requirement cannot be satisfied), information for whether there is any currently ongoing traffic. This may also be included only if there is ongoing traffic.
10) If the QoS reference of the lowest priority in the Alternate Service Requirement cannot be satisfied (i.e., the lowest level of service/QoS requirement cannot be satisfied), information for whether UL traffic is present, DL traffic is present, or both UL/DL traffic is present.
11) If the QoS reference of the lowest priority in the Alternate Service Requirement cannot be satisfied (i.e., the lowest level of service/QoS requirement cannot be satisfied), information informing that the QoS flow is being released and/or removed. If requested by the AF, the SMF may release and/or remove the QoS flow upon notification from the NG-RAN that the QoS reference of the lowest priority in the Alternate Service Requirement cannot be satisfied, instead of providing the requested information to the NG-RAN.
12) If requested by the AF to also notify the UE of the response information for any of the events in 1) to 11) above, the NG-RAN may notify the UE of the response information for the event that occurred. This notification may be done via RRC messages. Alternatively, if requested by the AF to also notify the UE of the response information, instead of providing the response information to the UE, the SMF may notify the UE of the response information for the event that occurred in 1) to 11) above via SM NAS message if it receives the corresponding response information from the NG-RAN.

The NG-RAN notifying the SMF of the corresponding response information according to the occurrence of an event related to the UL/DL notification request (or the occurrence of an event related to the UL/DL notification request) may be due to one or more of the following causes: creation of a PDU session, modification of a PDU session (for the purpose of adding a QoS flow, etc.), performance of a handover, congestion, or congestion relief.

(4) A method for the SMF to notify the received response information to the AF via the PCF

When the NG-RAN notifies the SMF of the occurrence of an event related to the UL/DL notification request and/or the corresponding response information, the SMF notifies the PCF. The PCF notifies the AF via the NEF or directly to the AF.

(5) A method for the AF to perform AI/MI, service-related operations based on the received response information

When the AF receives the response information from the SMF via the PCF, the AF may perform various operations related to AI/ML services. These operations may be to ensure that AI/ML services that are currently being performed or will be performed are performed smoothly. For example, examples of various operations related to AI/MI, services may include the followings.
1) If the AF is performing or about to perform a FL operation and is notified that the QoS reference of the lowest priority of the Alternative Service Requirements for DL cannot be satisfied with respect to 8) of the response information, the AF may decide to exclude the UE corresponding to the notification from the current iteration (and another UE may be selected for the current iteration) and/or not select it for the next iteration. The AF may communicate these decisions to the corresponding UE (e.g., using application signaling/messages).
2) If the AF is performing or about to perform a FL operation and is notified that the QoS reference of the lowest priority of the Alternative Service Requirements for both DL and UL cannot be satisfied with respect to 8) of the response information, the AF may decide not to select the UE corresponding to the notification as a member of the FL group. The AF may communicate these decisions to the corresponding UE (e.g., using application signaling/messages). Additionally, the AF may perform an operation to remove/cancel/revoke the AF session for the corresponding UE.
3) If the AF is performing FL operation and is notified that the QoS reference of the lowest priority of the Alternative Service Requirements cannot be satisfied and DL traffic is present with respect to 10) of the response information, the AF may decide to exclude the UE corresponding to the notification from the current iteration (another UE may be selected for the current iteration). The AF may communicate these decisions to the corresponding UE (e.g., using application signaling/messages).
4) If the AF is performing FL operation and is notified that the QoS reference of the lowest priority of the Alternative Service Requirements cannot be satisfied and UL traffic is present with respect to 10) of the response information, the AF may decide not to select the UE corresponding to the notification for the next iteration. The AF may communicate these decisions to the corresponding UE (e.g., using application signaling/messages). Alternatively, if the AF receives the above notification, it may decide that the time taken for the current iteration will be longer than expected.
5) If the AF is performing or about to perform AI/ML operation splitting between AI/ML endpoints and is notified that the QoS cannot be satisfied for both UL and DL with respect to 1) of the response information, the AF may decide split mode/point re-selection/switching for the UE corresponding to the notification. The AF may communicate these decisions to the corresponding UE (e.g., using application signaling/messages).
6) Wile in DL operation (e.g., server is deploying AI/MI, models to UEs) and is notified that the QoS cannot be satisfied for DL and/or UL/DL with respect to 1) of the response information, the AF may adjust the QoS requirements of other UEs in the FL group that satisfy the QoS (e.g., provide a request to the 5GC to reduce the rate, increase the delay) or determine that the FL cycle and/or iteration will take longer than expected. If the AF is notified that the UL QoS cannot be satisfied with respect to 1) of the response information, the AF may decide that no action is required.
7) While in UL operation (e.g., UE is reporting training results to the server) and is notified that the QoS cannot be satisfied for UL and/or UL/DL with respect to 1) of the response information, the AF may adjust the QoS requirements of other UEs in the FL group that satisfy the QoS (e.g., provide a request to the 5GC to reduce the rate or increase the delay) or determine that the FL cycle and/or iteration will take longer than expected. If the AF is notified that the DL QoS cannot be satisfied with respect to 1) of the response information, the AF may decide that no action is required.

### 2. Second Implementation

The second implementation of the present disclosure discloses a method for providing UL/DL related information when QoS flows for UL and QoS flows for DL are created separately.

If, at the request of the AF, the PCF and/or SMF decide to create separate QoS flows for UL and QoS flows for DL, then if the notification provided by the NG-RAN to the SMF is for QoS flows for UL, the SMF may transmit an event related notification to the PCF using the corresponding response information (e.g., UL QoS cannot be satisfied, UL traffic is present, etc). If the notification provided by the NG-RAN to the SMF is for QoS flows for DL, the SMF may transmit an event related notification to the PCF using the corresponding response information (e.g., DL QoS cannot be satisfied, DL traffic is present, etc.).

In order to provide separate QoS notifications for DL QoS flows and UL QoS flows (based on implicit and/or explicit request from the AF), even if the QoS (or QoS requirements) for the UL/DL requested by the AF are the same, the PCF may create PCC rules to create separate QoS flows for UL and QoS flows for DL.

If the PCF decides to create QoS flows for UL and QoS flows for DL separately and/or if decides to provide PCC rules for the SMF to create QoS flows for UL and QoS flow for DLs separately, then if the notification provided by the SMF to the PCF (which may be a notification related to conventional QoS satisfied/not satisfied and/or a notification related to QNC) is for QoS flows (or service data flow or PCC rule) for UL, the PCF may transmit an event related notification to the AF using the corresponding response information (e.g., UL QoS cannot be satisfied, etc). If the notification provided by the SMF to the PCF (which may be a notification related to conventional QoS satisfied/not satisfied and/or a notification related to QNC) is for QoS flows (or service data flow or PCC rule) for DL, the PCF may transmit an event related notification to the AF using the corresponding response information (e.g., DL QoS cannot be satisfied, etc.).

As described above, the decision by the PCF and/or SMF to create separate QoS flows for UL and DL, and/or the decision by the PCF to provide PCC rules for the SMF to create separate QoS flows for UL and DL, may be based on one or more of the following.
1) based on the UL/DL notification request information provided by the AF
2) based on the conventional information provided by AF (e.g., AF identifier, flow description or External Application Identifier, QoS Reference, (optional) Alternative Service Requirements, DNN, S-NSSAI): For example, if the AF identifier indicates the AF performing AI/ML operations, or the QoS Reference is for AI/MI, operations, and/or the DNN or S-NSSAI, or a combination thereof, is for AI/ML operations.
3) Information configured in the PCF and/or SMF: For example, when the DNN or S-NSSAI, or a combination thereof, is for AI/ML operations.

The information notified to the AF may be any of the response information described above.

The present disclosure can have various advantageous effects.

For example, given the nature of AI/ML services, it may provide the AF with information about UL/DL as well as whether QoS is satisfied, which the AF can utilize to perform operations related to AI/ML services.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a Next Generation (NG)-Radio Access Network (RAN) adapted to operate in a wireless communication system, the method comprising:
receiving, from a Session Management Function (SMF), a Quality of Service (QoS) profile generated based on a Policy and Charging Control (PCC) rule including information for an Uplink (UL)/Downlink (DL) notification request; and
based on an event occurring with respect to the UL/DL notification request, transmitting, to the SMF, a notification message including response information to the UL/DL notification request.

2. The method of claim 1, wherein the response information to the UL/DL notification request includes, if QoS cannot be satisfied, information for whether UL QoS cannot be satisfied, DL QoS cannot be satisfied, or both UL/DL QoS cannot be satisfied.

3. The method of claim 1, wherein the response information to the UL/DL notification request includes, if QoS cannot be satisfied, information for whether there is any currently ongoing traffic.

4. The method of claim 1, wherein the response information to the UL/DL notification request includes, if QoS cannot be satisfied, information for whether UL traffic is present, DL traffic is present, or both UL/DL traffic is present, if there is any currently ongoing traffic.

5. The method of claim 1, wherein the response information to the UL/DL notification request includes, if the QoS cannot be satisfied, information informing that a QoS flow is released or removed.

6. The method of claim 1, wherein the response information to the UL/DL notification request includes, if QoS can be satisfied again, information for whether UL QoS can be satisfied again, DL QoS can be satisfied again, or both UL/DL QoS can be satisfied again.

7. The method of claim 1, wherein the response information to the UL/DL notification request includes, if the QoS can be satisfied again, information for whether there is any currently ongoing traffic.

8. The method of claim 1, wherein the response information to the UL/DL notification request includes, if QoS can be satisfied again, information for whether UL traffic is present, DL traffic is present, or both UL/DL traffic is present, if there is any currently ongoing traffic.

9. The method of claim 1, wherein the response information to the UL/DL notification request includes, if a QoS requirement of a lowest priority cannot be satisfied, information for whether UL QoS cannot be satisfied, DL QoS cannot be satisfied, or both UL/DL QoS cannot be satisfied.

10. The method of claim 1 wherein the response information to the UL/DL notification request includes, if a QoS requirement of a lowest priority cannot be satisfied, information for whether there is any currently ongoing traffic.

11. The method of claim 1, wherein the response information to the UL/DL notification request includes, if a QoS requirement of a lowest priority cannot be satisfied, information for whether UL traffic is present, DL traffic is present, or both UL/DL traffic is present, if there is any currently ongoing traffic.

12. The method of claim 1, wherein the response information to the UL/DL notification request includes, if a QoS requirement of a lowest priority cannot be satisfied, information informing that a QoS flow is released or removed.

13. The method of claim 1, wherein the response information to the UL/DL notification request is transmitted to a User Equipment (UE).

14. The method of claim 1, wherein the notification message is transmitted in response to at least one of a creation of a Protocol Data Unit (PDU) session, a modification of a PDU session, a performance of a handover, congestion, and congestion relief.

15. The method of claim 1, wherein the response information to the UL/DL notification request included in the notification message and transmitted to the SMF is communicated from the SMF to an Application Function (AF) via a Policy and Charging Function (PCF).

16. The method of claim 1, wherein the QoS profile is received via at least one of a PDU session creation procedure, a PDU session modification procedure, or a handover procedure.

17. The method of claim 1, wherein the information for the UL/DL notification request is generated by an AF and communicated from the AF to the SMF via a PCF.

18. A Next Generation (NG)-Radio Access Network (RAN) adapted to operate in a wireless communication system, the NG-RAN comprising:
at least one transceiver;
at least one processor; and
at least one memory operably connectable to the at least one processor and storing instructions that, based on being executed by the at least one processor, perform operations comprising:
receiving, from a Session Management Function (SMF), a Quality of Service (QoS) profile generated based on a Policy and Charging Control (PCC) rule including information for an Uplink (UL)/Downlink (DL) notification request; and
based on an event occurring with respect to the UL/DL notification request, transmitting, to the SMF, a notification message including response information to the UL/DL notification request.

19. A method performed by an Application Function (AF) adapted to operate in a wireless communication system, the method comprising:
transmitting information for an Uplink (UL)/Downlink (DL) notification request to a Session Management Function (SMF) via a Policy and Charging Function (PCF);
receiving response information to the UL/DL notification request from the SMF via the PCF; and
performing an operation related to Artificial Intelligence (AI)/Machine Learning (ML) based on the response information.

20. The method of claim 19, wherein the UL/DL notification request includes, if QoS cannot be satisfied, information requesting to be informed of a direction in which the QoS cannot be satisfied.

21. The method of claim 19, wherein the UL/DL notification request includes, if QoS cannot be satisfied, information requesting to be informed of whether there is currently any ongoing traffic.

22. The method of claim 19, wherein the UL/DL notification request includes, if QoS cannot be satisfied, information requesting to be informed of a direction of currently ongoing traffic, if any.

23. The method of claim 19, wherein the UL/DL notification request includes, if QoS cannot be satisfied, information informing to release or remove a QoS flow.

24. The method of claim 19, wherein the UL/DL notification request includes, if QoS can be satisfied again, information requesting to be informed of a direction in which the QoS can be satisfied again.

25. The method of claim 19, wherein the UL/DL notification request includes, if QoS can be satisfied again, information requesting to be informed of whether there is currently any ongoing traffic.

26. The method of claim 19, wherein the UL/DL notification request includes, if QoS can be satisfied again, information requesting to be informed of a direction of currently ongoing traffic, if any.

27. The method of claim 19, wherein the UL/DL notification request includes, if a QoS requirement of a lowest priority cannot be satisfied, information requesting to be informed of a direction in which QoS cannot be satisfied.

28. The method of claim 19, wherein the UL/DL notification request includes, if a QoS requirement of a lowest priority cannot be satisfied, information requesting to be informed of whether there is currently any ongoing traffic.

29. The method of claim 19, wherein the UL/DL notification request includes, if a QoS requirement of a lowest priority cannot be satisfied, information requesting to be informed of a direction of currently ongoing traffic, if any.

30. The method of claim 19, wherein the UL/DL notification request includes, if a QoS requirement of a lowest priority cannot be satisfied, information informing to release or remove a QoS flow.

31. The method of claim 19, wherein the UL/DL notification request includes information requesting that the response information to the UL/DL notification request also be transmitted to a User Equipment (UE).

32. The method of claim 19, wherein the response information to the UL/DL notification request is generated by a Next Generation (NG)-Radio Access Network (RAN) and communicated from the SMF to the AF via the PCF.

33. An Application Function (AF) adapted to operate in a wireless communication system, the AF comprising:
at least one transceiver;
at least one processor; and
at least one memory operably connectable to the at least one processor and storing instructions that, based on being executed by the at least one processor, perform operations comprising:
transmitting information for an Uplink (UL)/Downlink (DL) notification request to a Session Management Function (SMF) via a Policy and Charging Function (PCF);
receiving response information to the UL/DL notification request from the SMF via the PCF; and
performing an operation related to Artificial Intelligence (AI)/Machine Learning (ML) based on the response information.
